# EUROPEAN PATENT SPECIFICATION

(11) **EP 2 755 361 B1**
(45) Date of publication and mention of the grant of the patent: **30.03.2016**
(21) Application number: 14164350.2
(22) Date of filing: 05.09.2008
(51) Int. Cl.: H04L 27/26, H04J 11/00

(54) **METHOD AND SYSTEM FOR TRANSMITTING AND RECEIVING SIGNALS**
VERFAHREN UND SYSTEM ZUM ÜBERTRAGEN UND EMPFANGEN VON SIGNALEN
PROCÉDÉ ET SYSTÈME DE TRANSMISSION ET DE RÉCEPTION DE SIGNAUX

(30) Priority: 06.09.2007 US 970523 P
(43) Date of publication of application: 16.07.2014
(62) Divisional of application: 12197487.7
(73) Proprietor: LG Electronics, Inc., Seoul 150-721 (KR)
(72) Inventor: Ko, Woo Suk, 137-724 Seoul (KR); Moon, Sang Chul, 137-724 Seoul (KR)
(74) Representative: Cabinet Plasseraud

(56) References cited:
- López Arranz C. A.et al: "Design of a simulation platform to test next generation of terrestrial DVB", UPCommons - Universitat Politècnica de Catalunya , 19 July 2007 (2007-07-19), pages Frontpg.-122, XP002694807, Retrieved from the Internet: URL:http://upcommons.upc.edu/pfc/bitstream /2099.1/4218/1/memoria.pdf [retrieved on 2013-02-25]

## Description

### Technical Field

The present invention relates to a method of efficiently transmitting and receiving signals and efficient transmitter and receiver for an OFDM (Orthogonal Frequency Division Multiplexing) system including a TFS (Time-Frequency Slicing).

### Background Art

TFS (Time Frequency Slicing) technique has been introduced for broadcasting. When a TFS is used, a single service can be transmitted through multiple RF (Radio Frequency) channels on a two-dimensional time-frequency space.

OFDM (Orthogonal Frequency Division Multiplexing) is a frequency-division multiplexing (FDM) scheme utilized as a digital multi-carrier modulation method. A large number of closely-spaced orthogonal sub-carriers are used to carry data. The data are divided into several parallel data streams or channels, one for each sub-carrier. Each sub-carrier is modulated with a conventional modulation scheme (such as quadrature amplitude modulation or phase shift keying) at a low symbol rate, maintaining total data rates similar to conventional single-carrier modulation schemes in the same bandwidth.

OFDM has developed into a popular scheme for wideband digital communication, whether wireless or over copper wires, used in applications such as digital television and audio broadcasting, wireless networking and broadband internet access.

When TFS, which uses multiple RF bands for each transmitter is combined with OFDM, frequency diversity gain and statistical multiplexing gain can be obtained, thus, resources can be efficiently utilized. Document: Lopez Arranz C, A et al: "Design of a simulation platform to test next generation of terrestrial DVB", UPCommons-Universitat Politecnica de Catalunya, 19 July 2007 (2007-07-19), internet citation: http//upcommons.upc.edu/pfc/bitstream/2099.1/4218/1/memoria.pdf, discloses features of a simulation platform to test digital television systems.

### Disclosure of Invention

### Technical Problem

It is, therefore, an object of the present invention to provide a method of efficiently transmitting and receiving signals and efficient transmitter and receiver for an OFDM system including TFS.

### Technical Solution

According to an aspect of the present invention, there is provided a method of transmitting signals according to claim 1.

According to another aspect of the present invention, there is provided a receiver according to claim 13.

According to yet another aspect of the present invention, there is provided a method of receiving signals according to claim 9. According to a further aspect of the invention, there is provided a transmitter according to claim 5.

It is to be understood that both the foregoing general description and the following detailed description of the present invention are exemplary and explanatory and are intended to provide further explanation of the invention as claimed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Advantageous Effects

According to the present invention, it is possible to provide a method of efficiently transmitting and receiving signals and efficient transmitter and receiver for an OFDM system including TFS.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a block diagram of an example of a TFS (Time Frequency Slicing)-OFDM (Orthogonal Frequency Division Multiplexing) transmitter.
Fig. 2 is a block diagram of an example of the input processor shown in the Fig. 1.
Fig. 3 is a block diagram of an example of the BICM (Bit-Interleaved Coding and Modulation) shown in Fig. 1.
Fig. 4 is a block diagram of an example of the Frame Builder shown in Fig. 1.
Fig. 5 is a table of an example of a hybrid modulation ratio when an LDPC block length is 64800 bits.
Fig. 6 is a table of an example of a hybrid modulation ratio when an LDPC block length is 16200 bits.
Fig. 7 is a block diagram of an example of the QAM mapper shown in Fig. 1.
Fig. 8 is a block diagram of an example of the QAM mapper combined with an inner encoder and an inner interleaver.
Fig. 9 is an example of a bit interleaver.
Fig. 10 is a table of an example of the bit interleaver when an LDPC block length is 64800 bits.
Fig. 11 is a table of an example of the bit interleaver when an LDPC block length is 16200 bits.
Fig. 12 is an example of the demux shown in Fig. 1.
Fig. 13 is another example of the demux shown in Fig. 1.
Fig. 14 is a relationship between an input bitstream of the bit interleaver and an output bitstream of the demux.
Fig. 15 is an example of a QAM symbol mapping.
Fig. 16 is a block diagram of an example of the MIMO/MISO decoder shown in Fig. 1.
Fig. 17 is a block diagram of an example of the modulator, specifically an example of an OFDM modulator.
Fig. 18 is a block diagram of an example of the analog processor shown in Fig. 1.
Fig. 19 is a block diagram of an example of a TFS-OFDM receiver.
Fig. 20 is a block diagram of an example of the AFE (Analog Front End) shown in Fig. 19.
Fig. 21 is a block diagram of an example of the demodulator, specifically an OFDM demodulator.
Fig. 22 is a block diagram of an example of the MIMO/MISO decoder shown in Fig. 19.
Fig. 23 is a block diagram of an example of the frame parser shown in Fig. 19.
Fig. 24 is a block diagram of an example of the QAM demapper shown in Fig. 23.
Fig. 25 is a block diagram of an example of the QAM demapper combined with an inner deinterleaver.
Fig. 26 is a block diagram of an example of the BICM decoder shown in Fig. 19.
Fig. 27 is a block diagram of an example of the output processor shown in Fig. 19.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

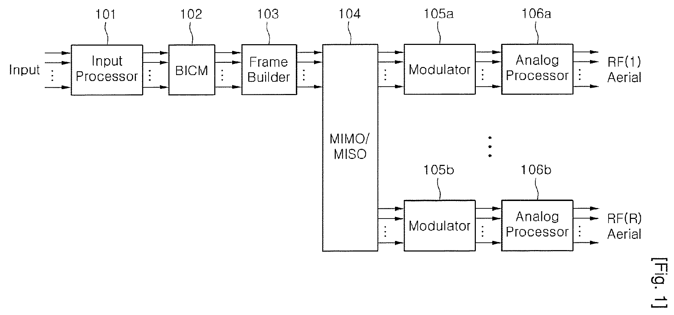

Fig. 1 shows an example of proposed TFS (Time Frequency Slicing)-OFDM (Orthogonal Frequency Division Multiplexing) transmitter. A multiple MPEG2-TS (Transport Stream) and a multiple Generic stream can be inputted into a TFS transmitter. The input processor (101) can split the inputted streams into a multiple output signals for a multiple PLP (Physical Layer Path). The BICM (Bit-Interleaved Coding and Modulation) (102) can encode and interleave the PLP individually. The frame builder (103) can transform the PLP into total R of RF bands. MIMO (Multiple-Input Multiple-Output)/MISO (Multiple-Input Single-Output) (104) technique can be applied for each RF band. Each RF band for each antenna can be individually modulated by the modulator (105a, b) and can be transmitted to antennas after being converted to an analog signal by the analog processor (106a, b).

### Mode for the Invention

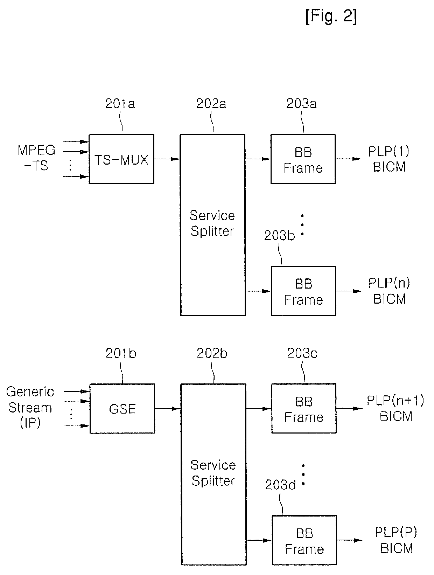

Fig. 2 is an example of the input processor. MPEG-TS (Transport Stream) can be multiplexed into a single output through TS-MUX (201 a) and Generic streams (Internet protocol) can be transformed into a single output through GSE (General Stream Encapsulation) (201b). Each output from the TS-MUX and GSE can be split for multiple services by the service splitter (202a, b). PLP is a processing of each service. Each PLP can be transformed into a frame by the BB (Baseband) Frame (103a-d).

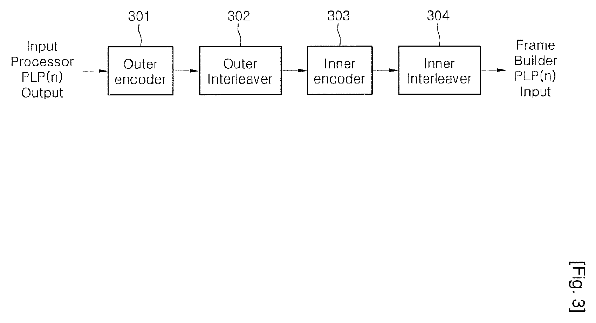

Fig. 3 is an example of the BICM. The Outer encoder (301) and the inner encoder (303) can add redundancy for error correction in a transmission channel. The outer interleaver (302) and the inner interleaver (304) can interleave data randomly to mitigate burst errors.

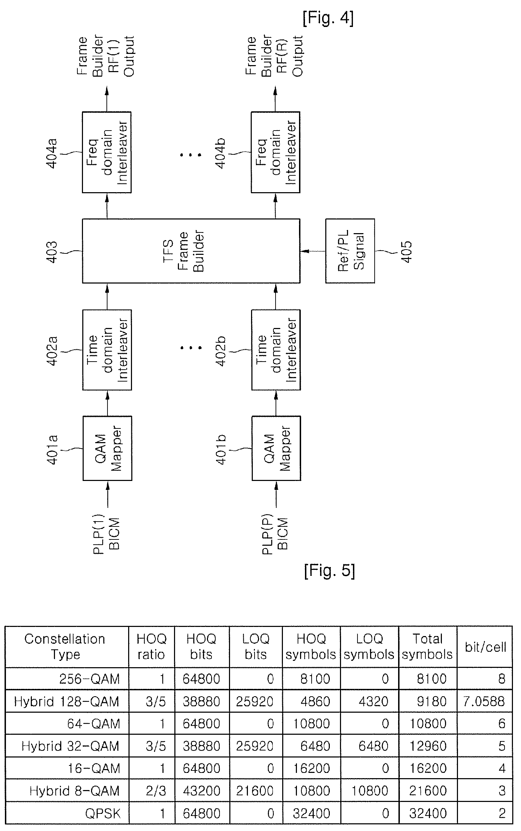

Fig. 4 is an example of the frame builder. QAM mapper (40 1a, b) can transform inputted bits into QAM symbols. Hybrid QAM can be used. Time domain interleaver (402a, b) can interleave data in time domain to make the data be robust against burst error. At this point, an effect of interleaving many RF bands can be obtained in a physical channel because the data are going to be transmitted to a multiple RF bands. TFS frame builder (403) can split inputted data to form TFS frames and send the TFS frames to total R of RE bands according to a TFS scheduling. Each RF band can be individually interleaved in frequency domain by frequency domain interleaver (404a, b) and can become robust against frequency selective fading. Ref (Reference Signals), PL (Physical Layer) signaling, and pilots can be inserted when the TFS frame is built (405).

By hybriding two Even-QAMs, which transmits even number of bits per QAM symbol, an Odd-QAM, which transmits odd number of bits per QAM symbol can be formed by a Hybrid QAM mapper. For example, hybrid 128-QAM can be obtained by hybriding 256-QAM and 64-QAM, hybrid 32-QAM can be obtained by hybriding 64-QAM and 16-QAM, and hybrid 8-QAM can be obtained by hybriding 16-QAM and 4-QAM.

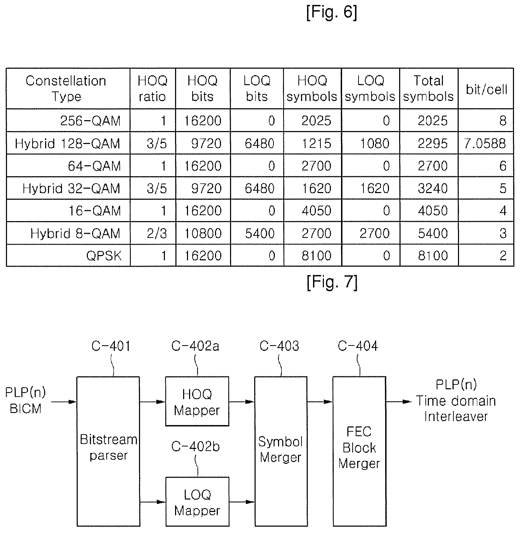

Fig. 5 and Fig. 6 show examples of a hybrid ratio when DVB-S2 LDPC (Low Density Parity Check) code is used as an inner code. The first column on the table represents constellation type. HOQ (Higher-Order QAM) ratio represents a ratio for higher-order QAM between two QAM types. LOQ (Lower-Order QAM) ratio is 1-HOQ ratio. Hybrid QAM can be obtained by two adjacent Even-QAMs. For example, hybrid 128-QAM (bit/cell=7) is obtained by hybriding 256-QAM and 64-QAM. HOQ bits and LOQ bits represent number of bits used for mapping into HOQ symbol and LOQ symbol respectively in one LDPC block. HOQ symbols and LOQ symbols represent number of symbols after symbol mapping. Total symbol is a sum of the HOQ symbols and the LOQ symbols. The last column on the table represents effective number of bits transmitted per QAM symbol. As seen on the table, only Hybrid 128-QAM shows a slight difference from 7 bit/cell.

Fig. 6 shows a case when LDPC block length is 16200 bits. When a scheduling is performed to evenly distribute QAM symbols, which are generated by the Frame Builder, to RF bands of TFS system, the value of the total symbols should be divisible by a least common multiple of each index number of RF band. For example, if six RF bands are allowed, then the value of total symbols on the table should be divisible by a least common multiple of 1 through 6, i.e., 60. For the case shown in Fig. 5, it is divisible. However, for the case shown in Fig. 6, it is not divisible. If LDPC block length is 16200 bits as shown in Fig. 6, the total symbols on the table can be made divisible by 60 by combining four of the LDPC blocks into a single LDPC block having a length of 64800 as in Fig. 5.

Fig. 7 shows an example of QAM mapper using hybrid modulation. Bit stream parser (c-401) can parse inputted bitstreams into HOQ mapper (c-402a) and LOQ mapper (c-402b). The symbol merger (c-403) can merge the two inputted symbol streams into a single symbol stream. FEC (Forward Error Correction) block merger (c-404), for example, can combine four of bit symbol blocks having a length of 16200 into a single block having a length of 64800.

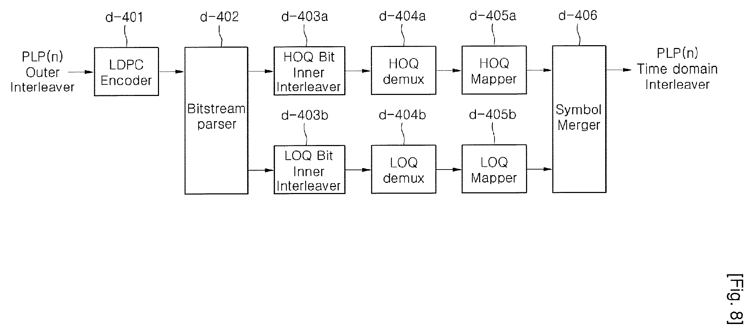

Fig. 8 shows an example of QAM mapper combined with inner interleavers. Bitstreams can be divided by bitstream parser (d-402) into bitstreams for HOQ and LOQ mappers. Each bitstream goes through bit interleaving (d-403a, d-403b) and demux (d-404a, d-406) processes. Throughout these processes, characteristics of LDPC codeword and constellation reliability can be combined. Each output can be converted into symbolstreams by the HOQ and LOQ mappers (d-405a, d-405b), then merged into a single symbol stream by the symbol merger (d-406).

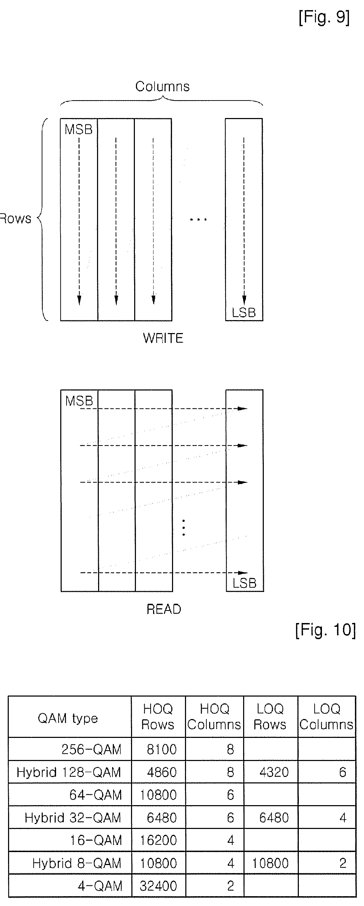

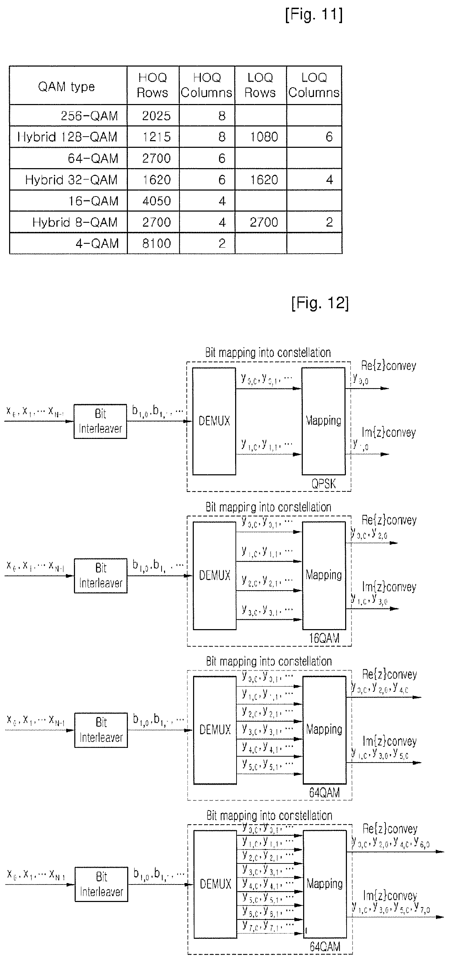

Fig. 9 shows an example of bit interleaving. Bits can be saved into a matrix type memory having columns and rows in the direction of column or in the direction of the blue arrow. Then the saved bits can be read out in the direction of row or in the direction of the red arrow. Figs. 10 and 11 show numbers of columns and rows of HOQ bit interleaver (d-403a) and LOQ bit interleaver (d-403b) according to QAM modulation type. As seen in the tables, when a typical even-QAM is used but a hybrid modulation is not used, only HOQ interleaving is used.

Fig. 12 shows an example of the demux. It shows that interleaved outputs according to QPSK, 16-QAM, 64-QAM, and 256-QAM can be demultiplexed and mapped. It also shows that the numbers of output bitstreams from demuxs are 2, 4, 6, and 8 respectively.

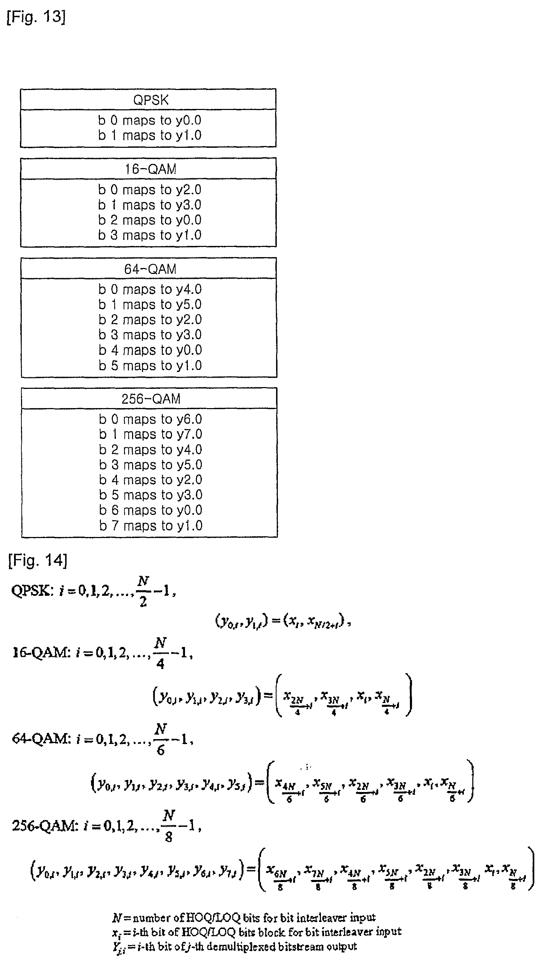

Detail of the demux operation is shown in Fig. 13. As seen in the figure, output order of interleaver can be changed by demux. For example, for the case of 16-QAM, bitstreams can be outputted as j-th output bitstream of each demux according to a value resulting from performing an modulo-4 operation on index of input bitstream b. Fig. 13 shows a relationship between a value resulting from a modulo operation and demux output branch index j.

Fig. 14 shows a relationship between an input bitstream of bit interleaver and an output bitstream of demux. As seen in the equations, dividing index of input bitstream by 2, 4, 6, and 8 is a result by the interleaving and mapping each index to index of output bitstream is a result by the demux.

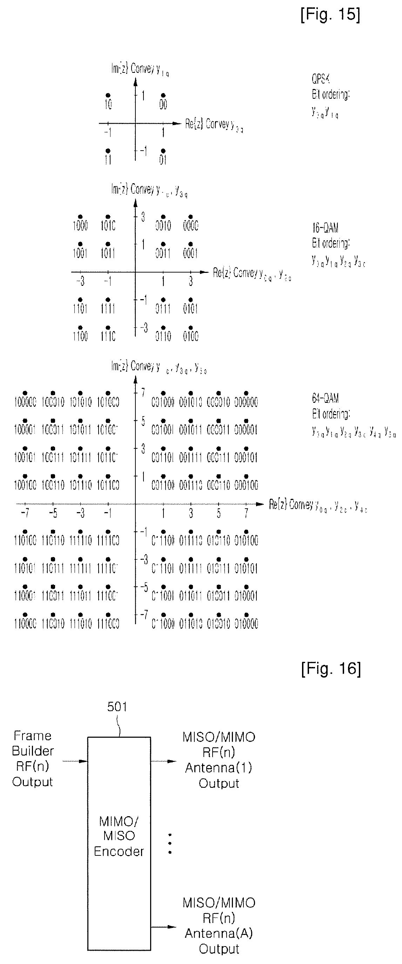

Fig. 15 shows an example of QAM symbol mapping. Output bitstream of demux can be converted into symbolstream by using Gray mapping rule. Even if it is not shown, it can be extended to constellation of 256-QAM or more.

Fig. 16 shows an example of MIMO/MISO Encoder. MIMO/MISO Encoder (501) applies MIMO/MISO method to obtain an additional diversity gain or payload gain. MIMO/MISO Encoder can output signals for total A of antennas. MIMO encoding can be performed individually on total A of antenna signals for each RF band among total R of RF bands. A is equal to or greater than 1.

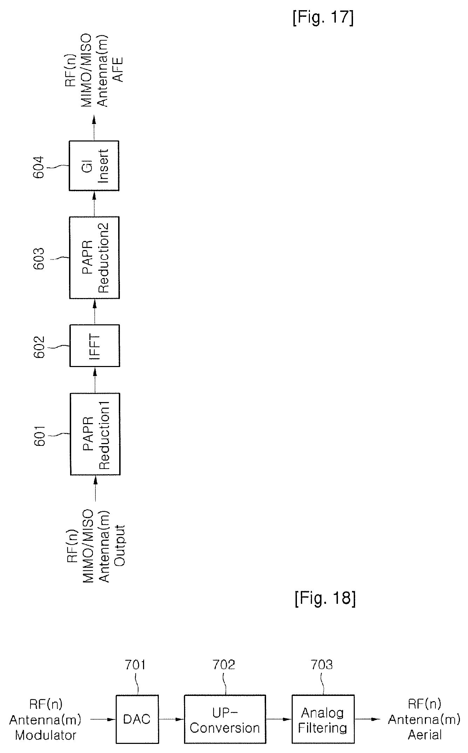

Fig. 17 shows an example of a modulator, specifically an example of an OFDM modulator. PAPR (Peak-to-Average Power Ratio) reduction 1 (601) can be performed on Antenna (m) signals of RF (n) bands. IFFT (602) can be performed for OFDM demodulation. PAPR reduction 2 (603) can be performed after the IFFT. ACE (Active Constellation Extension) and a tone reservation can be used for the PAPR reduction 2 (603). Lastly, guard interval (604) can be inserted.

Fig. 18 shows an example of the analog processor. Output of each modulator can be converted to an analog-domain signal by a DAC (Digital to Analog Conversion) (701), then can be transmitted to antenna after up-conversion (702). Analog filtering (703) can be performed.

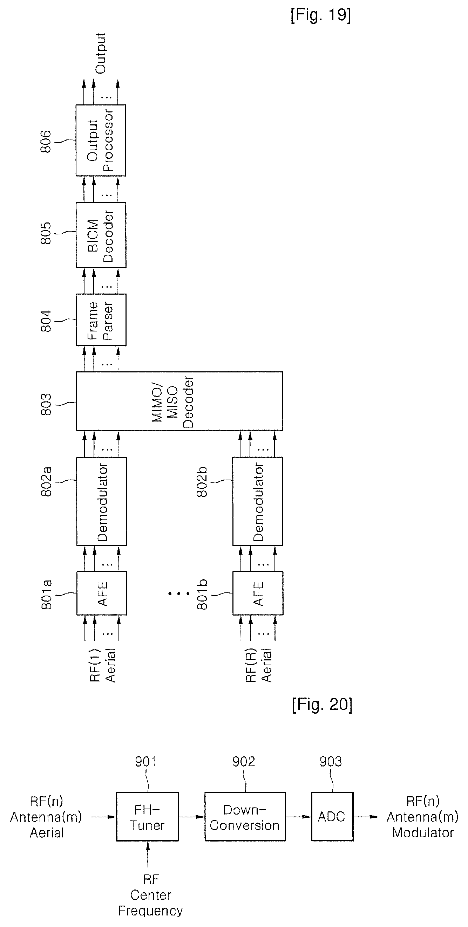

Fig. 19 shows an example of a TFS-OFDM receiver. When total R of RF bands are used for TFS system, received signals by AFE (Analog Front End) (801a,b) can be demodulated by demodulators (802a,b), then can be decoded by MIMO/MISO Decoder (803) to obtain diversity gain. Frame parser (804) can restore multiple PLP signals from received TFS frame. BICM decoder (805) can correct errors in a transmission channel. Finally, output processor (806) can restore signals according to necessary format.

Fig. 20 shows an example of an AFE (Analog Front End). FH (Frequency Hopping)-tuner (901) can perform a frequency hopping and tune signals according to inputted RF center frequency. After down-conversion (902), signals can be converted to digital signals by ADC (Analog to Digital Conversion) (903).

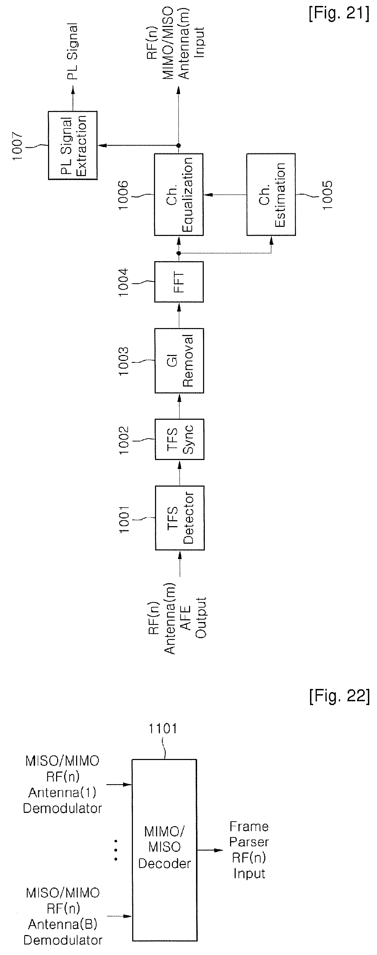

Fig. 21 shows an example of a demodulator, specifically an OFDM demodulator. TFS detector (1001) can detect TFS signals in a received digital signal. TFS sync (1002) can synchronize in time and frequency domains. After GI (Guard Interval) (1003) is removed, symbols in frequency domain can be obtained by performing FFT (1004) for OFDM demodulation. Channel Estimation (1005) can estimate distortion in a transmission channel based on pilot signals. Based on the estimated distortion, Channel Equalization (1006) can compensate distortion in the transmission channel. Finally, PL (Physical Layer) signaling information can be extracted from equalized data and can be transmitted to a system controller.

Fig. 22 shows an example of MIMIO/MISO decoder. Diversity and multiplexing gain can be obtained from data received from total B of antennas. For MIMO, B is greater than 1. For MISO, B is 1.

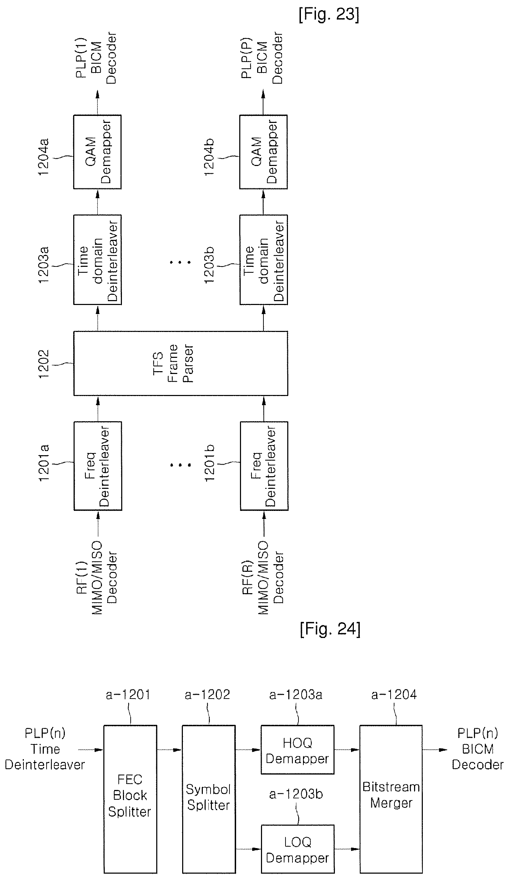

Fig. 23 shows an example of a Frame parser. Total R of the inputted RF bands data can undergo frequency deinterleaving (1201a, b), then can be reconstructed into datastream by TFS frame parser for each PLP (Physical Layer Path) according to a TFS scheduling. For each PLP, input data for BICM decoder can be obtained by using time domain deinterleaver (1203a, b) and QAM demapper (1204a, b). At this point, hybrid QAM demapper can be used as the QAM demapper.

Fig. 24 shows an example of performing a QAM demapper, which is a counterpart of Fig. 7 of transmitter. FEC block splitter can split inputted symbol block unit having 64800 bits into four symbol blocks of 16200 bits when short DVB-S2 LDPC mode is used. Symbol splitter (a-1202) can split inputted symbol streams into two symbol streams for HOQ and LOQ demapper. HOQ demapper (a-1203a) and LOQ demapper (a-1203b) can perform HOQ and LOQ demapping respectively. Bitstream merger (a-1204) can merge two inputted bit streams into a single output bitstream.

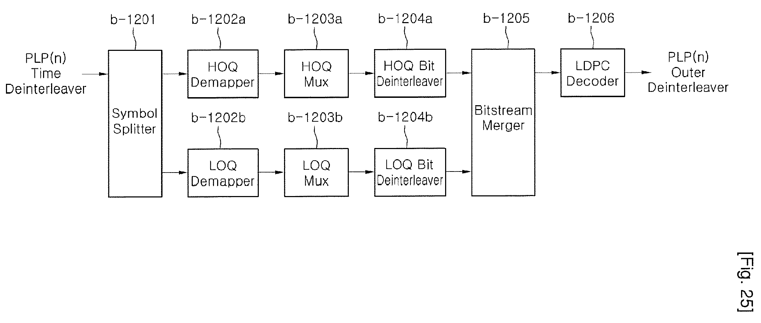

Fig. 25 shows an example of a QAM demapper combined with inner deinterleavers which are counterparts of Fig. 8 of transmitter. For each PLP, symbol splitter (b-1201) can split output of time domain deinterleaver into two symbol streams for HOQ and LOQ demappers. HOQ and LOQ Demapper (b- 1202a, b- 1202b) can convert symbolstreams into bitstreams. Each bitstream can be rearranged by multiplexer (b- 1203a, b- 1203b), which is a counterpart of the demux of Fig. 8 of transmitter. Two bit deinterleavers (b- 1204a, b-1206) can deinterleave bitstreams according to constellation type. Finally, bitstream merger (b-1205) can merge bitstreams into a single bitstream, then LDPC decoder (b-1206) can correct errors in a transmission channel.

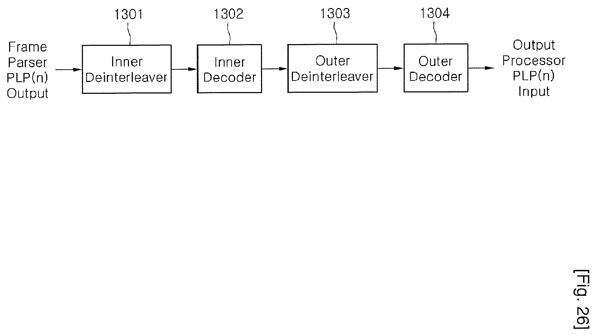

Fig. 26 shows an example of a BICM decoder. Inner deinterleaver (1301) and outer deinterleaver (1303) can convert burst errors in a transmission channel into random errors. Inner decoder (1302) and outer decoder (1304) can correct errors in the transmission channel.

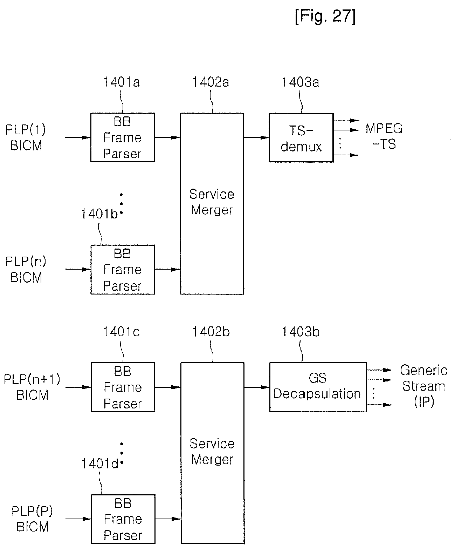

Fig. 27 shows an example of an output processor. BB (Baseband) frame parser (1401a∼d) can reconstruct input data into total P of PLP data. Service mergers (1402a, b) can merge data into a single TS (Transport Stream) and a single GSE stream. For TS, TS-demux (1403a) can reconstruct original TS. For GSE stream, OSE Decapsulation (1403b) can reconstruct generic stream.

It will be apparent to those skilled in the art that various modifications and variations can be made in the present invention. Thus, it is intended that the present invention covers the modifications and variations of this invention provided they come within the scope of the appended claims.

## Claims

1. A method of transmitting broadcast signals, the method comprising:
outer coding data per each of multiple Physical Layer Paths, PLPs;
inner coding the outer coded data by a Low Density Parity Check, LDPC, scheme;
interleaving the inner coded data;
dividing the interleaved data into a first bit stream for a High Order Quadrature Amplitude Modulation, HOQ, mapping method and into a second bit stream for a Low Order Quadrature Amplitude Modulation, LOQ, mapping method;
Quadrature Amplitude Modulation, QAM, mapping the divided data using the HOQ mapping method and the LOQ mapping method;
encoding the mapped data using a Multi-Input Multi-Output, MIMO, scheme; and
Orthogonal Frequency Division Multiplex, OFDM, modulating the MIMO encoded data, wherein the MIMO encoded data is transmitted through a signal frame.

2. The method of claim 1, wherein the method further includes;
demultiplexing the first and the second bit stream into bitstreams for the HOQ mapping method and the LOQ mapping method.

3. The method of claim 2, wherein the demultiplexing further comprises;
changing an order of bits of data in the first bitstream of the divided two bitstreams according to the HOQ mapping method; and
changing an order of bits of data in the second bitstream of the divided two bitstreams according to the LOQ mapping method.

4. The method of claim 1, wherein the method further comprises:
outer coding data per each PLP;
inner coding the outer coded data by a Low Density Parity Check, LDPC, scheme;
Quadrature Amplitude Modulation, QAM, mapping the inner coded data;
time interleaving the mapped data, wherein the time interleaved data are encoded using a Multi Input, Single Output, MISO scheme,
Orthogonal Frequency Division Multiplex, OFDM, modulating the MISO encoded data, wherein the MISO encoded data is transmitted through a signal frame.

5. An apparatus for transmitting broadcast signals, the apparatus comprising:
an outer encoder (301) to outer code data per each of multiple Physical Layer Paths, PLPs;
an inner encoder (303) to inner code the outer coded data by a Low Density Parity Check, LDPC, scheme;
an interleaver (304) to interleave the inner coded data;
a bitstream parser (d402) to divide the interleaved data into a first bit stream for a High Order Quadrature Amplitude Modulation, HOQ, mapping method and into a second bit stream for a Low Order Quadrature Amplitude Modulation, LOQ, mapping method;
a Quadrature Amplitude Modulation, QAM, mapper (d-405a, d-405b) to map the divided data using the HOQ mapping method and the LOQ mapping method;
an encoder (104) to encode the mapped data using a Multi-Input Multi-Output, MIMO, scheme; and
an Orthogonal Frequency Division Multiplex, OFDM, modulator (105a, 105b) to modulate the MIMO encoded data, wherein the MIMO encoded data is transmitted through a signal frame.

6. The apparatus of claim 5, wherein the apparatus further includes;
a demultiplexer (d-404a, d-404b) to demultiplex the first and the second bit stream into bitstreams for the HOQ mapping method and the LOQ mapping method.

7. The apparatus of claim 6, wherein the demultiplexer (d-404a, d-404b) further changes an order of bits of data in the first bitstream of the divided two bitstreams according to the HOQ mapping method and changes an order of bits of data in the second bitstream of the divided two bitstreams according to the LOQ mapping method.

8. The apparatus of claim 5, wherein the apparatus further comprises:
an outer encoder (301) to outer code data per each PLP;
an inner encoder (303) to inner code the outer coded data by a Low Density Parity Check, LDPC, scheme;
a Quadrature Amplitude Modulation, QAM, mapper (401a) to map the inner coded data;
a time interleaver (402a) to time interleave the mapped data,
wherein the time interleaved data are encoded using a Multi Input Single Output, MISO scheme, and
an Orthogonal Frequency Division Multiplex, OFDM, modulator (105a, 105b) to modulate the MISO encoded data, wherein the MISO encoded data is transmitted through a signal frame.

9. A method of receiving broadcast signals, the method comprising:
receiving the broadcast signals and Orthogonal Frequency Division Multiplex, OFDM, demodulating data in the received broadcast signals;
decoding the demodulated data using a Multi-Input Multi-Output, MIMO, scheme;
Quadrature Amplitude Modulation, QAM, demapping the decoded data using a High Order Quadrature Amplitude Modulation, HOQ, demapping method and a Low Order Quadrature Amplitude Modulation, LOQ, demapping method;
deinterleaving the QAM demapped data per a single Physical Layer Path, PLP;
inner decoding the deinterleaved data by a Low Density Parity Check, LDPC, scheme;
outer decoding the inner decoded data, wherein the MIMO decoded data is transmitted through a signal frame.

10. The method of claim 9, wherein the method further includes;
dividing the decoded data into two symbol streams.

11. The method of claim 10, wherein the method further comprises;
changing an order of bits of data in the first bitstream according to the HOQ mapping method; and
changing an order of bits of data in the second bitstream according to the LOQ mapping method.

12. The method of claim 9, wherein the method further comprises:
receiving other broadcast signals and Orthogonal Frequency Division Multiplex, OFDM, demodulating data in the received other broadcast signals; and
decoding the demodulated data using a Multi Input, Single Output, MISO, scheme.

13. An apparatus for receiving broadcast signals, the apparatus comprising:
an Orthogonal Frequency Division Multiplex, OFDM, demodulator (802a, 802b) to receive the broadcast signals and Orthogonal Frequency Division Multiplex, OFDM, demodulating data in the received broadcast signals;
a decoder (803) to decode the demodulated data using a Multi-Input Multi-Output, MIMO, scheme;
a Quadrature Amplitude Modulation, QAM, demapper (b-1202a, b-1202b) to demap the decoded data using a High Order Quadrature Amplitude Modulation, HOQ, demapping method and a Low Order Quadrature Amplitude Modulation, LOQ, demapping method;
a deinterleaver (1301) to deinterleave the QAM demapped data per a single Physical Layer Path, PLP;
an inner decoder (1302) to inner decode the deinterleaved data by a Low Density Parity Check, LDPC, scheme;
an outer decoder (1304) to outer decode the inner decoded data, wherein the MIMO decoded data is transmitted through a signal frame.

14. The apparatus of claim 13, wherein the apparatus further includes;
a symbol splitter (b-1201) to divide the decoded data into two symbol streams.

15. The apparatus of claim 14, wherein the QAM, demapper (b-1202a, b-1202b) further changes an order of bits of data in the first bitstream according to the HOQ mapping method and changes an order of bits of data in the second bitstream according to the LOQ mapping method.

16. The apparatus of claim 13, wherein the Orthogonal Frequency Division Multiplex, OFDM, demodulator (802a, 802b) receives other broadcast signals and Orthogonal Frequency Division Multiplex, OFDM, demodulating data in the received other broadcast signals; and the decoder (803) further decodes the demodulated data using a Multi Input, Single Output, MISO, scheme.

## Patentansprüche

1. Verfahren zum Senden von Rundfunksignalen, umfassend:
äußeres Kodieren von Daten pro jeden mehrerer Physical Layer Paths, PLPs;
inneres Kodieren der äußeren kodierten Daten durch ein Low-Density-Parity-Check-Schema, LDPC-Schema;
Verschachteln der inneren kodierten Daten;
Teilen der verschachtelten Daten in einen ersten Bitstrom für ein High-Order-Quadraturamplitudenmodulation-Abbildungsverfahren, HOQ-Abbildungsverfahren, und
in einen zweiten Bitstrom für ein Low-Order-Quadraturamplitudenmodulation-Abbildungsverfahren, LOQ-Abbildungsverfahren;
Quadraturamplitudenmodulation-Abbilden, QAM-Abbilden, der geteilten Daten anhand des HOQ-Abbildungsverfahrens und des LOQ-Abbildungsverfahrens;
Kodieren der abgebildeten Daten anhand eines Multi-Input/Multi-Output-Schemas, MIMO-Schemas; und
Orthogonal-Frequency-Division-Multiplex-Modulieren, OFDM-Modulieren, der MIMO-kodierten Daten, wobei die MIMO-kodierten Daten über einen Signalrahmen übertragen werden.

2. Verfahren nach Anspruch 1, wobei das Verfahren ferner Folgendes beinhaltet:
Demultiplexen des ersten und des zweiten Bitstroms in Bitströme für das HOQ-Abbildungsverfahren und das LOQ-Abbildungsverfahren.

3. Verfahren nach Anspruch 2, wobei das Demultiplexen ferner Folgendes umfasst:
Ändern einer Bitfolge von Daten im ersten Bitstrom der geteilten zwei Bitströme nach dem HOQ-Abbildungsverfahren und
Ändern einer Bitfolge von Daten im zweiten Bitstrom der geteilten zwei Bitströme nach dem LOQ-Abbildungsverfahren.

4. Verfahren nach Anspruch 1, wobei das Verfahren ferner Folgendes umfasst:
äußeres Kodieren von Daten pro jeden PLP;
inneres Kodieren der äußeren kodierten Daten durch ein Low-Density-Parity-Check-Schema, LDPC-Schema;
Quadraturamplitudenmodulation-Abbilden, QAM-Abbilden, der inneren kodierten Daten;
Zeitverschachteln der abgebildeten Daten, wobei die zeitverschachtelten Daten anhand eines Multi Input/Single-Output-Schemas, MISO-Schemas, kodiert werden;
Orthogonal-Frequency-Division-Multiplex-Modulieren, OFDM-Modulieren, der MISO-kodierten Daten, wobei die MISO-kodierten Daten über einen Signalrahmen übertragen werden.

5. Vorrichtung zum Senden von Rundfunksignalen, umfassend:
einen äußeren Kodierer (301) zum äußeren Kodieren von Daten pro jeden mehrerer Physical Layer Paths, PLPs;
einen inneren Kodierer (303) zum inneren Kodieren der äußeren kodierten Daten durch ein Low-Density-Parity-Check-Schema, LDPC-Schema;
einen Verschachtler (304) zum Verschachteln der inneren kodierten Daten;
einen Bitstromparser (d402) zum Teilen der verschachtelten Daten in einen ersten Bitstrom für ein High-Order-Quadraturamplitudenmodulation-Abbildungsverfahren, HOQ-Abbildungsverfahren, und in einen zweiten Bitstrom für ein Low-Order-Quadraturamplitudenmodulation-Abbildungsverfahren, LOQ-Abbildungsverfahren;
einen Quadraturamplitudenmodulation-Abbilder, QAM-Abbilder (d-405a, d-405b), zum Abbilden der geteilten Daten anhand des HOQ-Abbildungsverfahrens und des LOQ-Abbildungsverfahrens;
einen Kodierer (104) zum Kodieren der abgebildeten Daten anhand eines Multi-Input/Multi-Output-Schemas, MIMO-Schemas; und
einen Orthogonal-Frequency-Division-Multiplex-Modulator, OFDM-Modulator (105a, 105b), zum Modulieren der MIMO-kodierten Daten, wobei die MIMO-kodierten Daten über einen Signalrahmen übertragen werden.

6. Vorrichtung nach Anspruch 5, wobei die Vorrichtung ferner Folgendes beinhaltet:
einen Demultiplexer (d-404a, d-404b) zum Demultiplexen des ersten und des zweiten Bitstroms in Bitströme für das HOQ-Abbildungsverfahren und das LOQ-Abbildungsverfahren.

7. Vorrichtung nach Anspruch 6, wobei der Demultiplexer (d-404a, d-404b) ferner eine Bitfolge von Daten im ersten Bitstrom der geteilten zwei Bitströme nach dem HOQ-Abbildungsverfahren ändert und eine Bitfolge von Daten im zweiten Bitstrom der geteilten zwei Bitströme nach dem LOQ-Abbildungsverfahren ändert.

8. Vorrichtung nach Anspruch 5, wobei die Vorrichtung ferner Folgendes umfasst:
einen äußeren Kodierer (301) zum äußeren Kodieren von Daten pro jeden PLP;
einen inneren Kodierer (303) zum inneren Kodieren der äußeren kodierten Daten durch ein Low-Density-Parity-Check-Schema, LDPC-Schema;
einen Quadraturamplitudenmodulation-Abbilder, QAM-Abbilder (401a), zum Abbilden der inneren kodierten Daten;
einen Zeitverschachtler (402a) zum Zeitverschachteln der abgebildeten Daten, wobei die zeitverschachtelten Daten anhand eines Multi-Input/Single-Output-Schemas, MISO-Schemas, kodiert werden; und
einen Orthogonal-Frequency-Division-Multiplex-Modulator, OFDM-Modulator (105a, 105b), zum Modulieren der MISO-kodierten Daten, wobei die MISO-kodierten Daten über einen Signalrahmen übertragen werden.

9. Verfahren zum Empfangen von Rundfunksignalen, umfassend:
Empfangen der Rundfunksignale und Orthogonal-Frequency-Division-Multiplex-Demodulieren, OFDM-Demodulieren, von Daten in den empfangenen Rundfunksignalen;
Dekodieren der demodulierten Daten anhand eines Multi-Input/Multi-Output-Schemas, MIMO-Schemas;
Quadraturamplitudenmodulation-Rückabbilden, QAM-Rückabbilden, der dekodierten Daten anhand eines High-Order-Quadraturamplitudenmodulation-Rückabbildungsverfahrens, HOQ-Rückabbildungsverfahrens, und eines Low-Order-Quadraturamplitudenmodulation-Rückabbildungsverfahrens, LOQ-Rückabbildungsverfahrens;
Entschachteln der QAM-rückabgebildeten Daten pro einen einzelnen Physical Layer Path, PLP;
inneres Dekodieren der entschachtelten Daten durch ein Low-Density-Parity-Check-Schema, LDPC-Schema;
äußeres Dekodieren der inneren dekodierten Daten, wobei die MIMO-dekodierten Daten über einen Signalrahmen übertragen werden.

10. Verfahren nach Anspruch 9, wobei das Verfahren ferner Folgendes beinhaltet:
Teilen der dekodierten Daten in zwei Symbolströme.

11. Verfahren nach Anspruch 10, wobei das Verfahren ferner Folgendes umfasst:
Ändern einer Bitfolge von Daten im ersten Bitstrom nach dem HOQ-Abbildungsverfahren und
Ändern einer Bitfolge von Daten im zweiten Bitstrom nach dem LOQ-Abbildungsverfahren.

12. Verfahren nach Anspruch 9, wobei das Verfahren ferner Folgendes umfasst:
Empfangen anderer Rundfunksignale und Orthogonal-Frequency-Division-Multiplex-Demodulieren, OFDM-Demodulieren, von Daten in den empfangenen anderen Rundfunksignalen und
Dekodieren der demodulierten Daten anhand eines Multi-Input/Single-Output-Schemas, MISO-Schemas.

13. Vorrichtung zum Empfangen von Rundfunksignalen, umfassend:
einen Orthogonal-Frequency-Division-Multiplex-Demodulator, OFDM-Demodulator (802a, 802b), zum Empfangen der Rundfunksignale und zum Orthogonal-Frequency-Division-Multiplex-Demodulieren, OFDM-Demodulieren, von Daten in den empfangenen Rundfunksignalen;
einen Dekodierer (803) zum Dekodieren der demodulierten Daten anhand eines Multi-Input/Multi-Output-Schemas, MIMO-Schemas;
einen Quadraturamplitudenmodulation-Rückabbilder, QAM-Rückabbilder, (b-1202a, b-1202b) zum Rückabbilden der dekodierten Daten anhand eines High-Order-Quadraturamplitudenmodulation-Rückabbildungsverfahrens, HOQ-Rückabbildungsverfahrens, und eines Low-Order-Quadraturamplitudenmodulation-Rückabbildungsverfahrens, LOQ-Rückabbildungsverfahrens;
einen Entschachtler (1301) zum Entschachteln der QAM-rückabgebildeten Daten pro einen einzelnen Physical Layer Path, PLP;
einen inneren Dekodierer (1302) zum inneren Dekodieren der entschachtelten Daten durch ein Low-Density-Parity-Check-Schema, LDPC-Schema;
einen äußeren Dekodierer (1304) zum äußeren Dekodieren der inneren dekodierten Daten, wobei die MIMO-dekodierten Daten über einen Signalrahmen übertragen werden.

14. Vorrichtung nach Anspruch 13, wobei die Vorrichtung ferner Folgendes beinhaltet:
einen Symbolspalter (b-1201) zum Teilen der dekodierten Daten in zwei Symbolströme.

15. Vorrichtung nach Anspruch 14, wobei der QAM-Rückabbilder (b-1202a, b-1202b) ferner eine Bitfolge von Daten im ersten Bitstrom nach dem HOQ-Abbildungsverfahren ändert und eine Bitfolge von Daten im zweiten Bitstrom nach dem LOQ-Abbildungsverfahren ändert.

16. Vorrichtung nach Anspruch 13, wobei der Orthogonal-Frequency-Division-Multiplex-Demodulator, OFDM-Demodulator, (802a, 802b) andere Rundfunksignale empfängt und Daten in den empfangenen anderen Rundfunksignalen Orthogonal-Frequency-Division-Multiplex-demoduliert, OFDM-demoduliert; und
wobei der Dekodierer (803) ferner die demodulierten Daten anhand eines Multi-Input-Single-Output-Schemas, MISO-Schemas, dekodiert.

## Revendications

1. Procédé pour transmettre des signaux de radiodiffusion, le procédé comprenant :
le codage externe de données pour chacun de multiples chemins de couche physique, PLP ;
le codage interne des données soumises au codage externe par un schéma de contrôle de parité à faible densité, LDPC ;
l'entrelacement des données soumises au codage interne ;
la division des données entrelacées en un premier train binaire pour un procédé de mappage par modulation d'amplitude en quadrature d'ordre supérieur, HOQ, et en un deuxième train binaire pour un procédé de mappage par modulation d'amplitude en quadrature d'ordre inférieur, LOQ ;
le mappage par modulation d'amplitude en quadrature, QAM, des données divisées en utilisant le procédé de mappage HOQ et le procédé de mappage LOQ ;
le codage des données mappées en utilisant un schéma à entrées multiples et sorties multiples, MIMO ; et
la modulation par multiplexage par répartition en fréquence orthogonale, OFDM, des données codées MIMO, dans lequel les données codées MIMO sont transmises à travers une trame de signal.

2. Procédé selon la revendication 1, dans lequel le procédé comprend en outre :
le démultiplexage du premier et du deuxième train binaire en trains binaires pour le procédé de mappage HOQ et le procédé de mappage LOQ.

3. Procédé selon la revendication 2, dans lequel le démultiplexage comprend en outre :
le changement d'un ordre de bits de données dans le premier train binaire des deux trains binaires divisés selon le procédé de mappage HOQ ; et
le changement d'un ordre de bits de données dans le deuxième train binaire des deux trains binaires divisés selon le procédé de mappage LOQ.

4. Procédé selon la revendication 1, dans lequel le procédé comprend en outre :
le codage externe de données pour chaque PLP ;
le codage interne des données soumises au codage externe par un schéma de contrôle de parité à faible densité, LDPC ;
le mappage par modulation d'amplitude en quadrature, QAM, des données soumises au codage interne ;
l'entrelacement temporel des données mappées, dans lequel les données entrelacées temporellement sont codées en utilisant un schéma à entrées multiples et sortie unique, MISO,
la modulation par multiplexage par répartition en fréquence orthogonale, OFDM, des données codées MISO, dans lequel les données codées MISO sont transmises à travers une trame de signal.

5. Appareil pour transmettre des signaux de radiodiffusion, l'appareil comprenant :
un codeur externe (301) pour le codage externe de données pour chacun de multiples chemins de couche physique, PLP ;
un codeur interne (303) pour le codage interne des données soumises au codage externe par un schéma de contrôle de parité à faible densité, LDPC ;
un entrelaceur (304) pour entrelacer les données soumises au codage interne ;
un analyseur syntaxique (d402) pour diviser les données entrelacées en un premier train binaire pour un procédé de mappage par modulation d'amplitude en quadrature d'ordre supérieur, HOQ, et en un deuxième train binaire pour un procédé de mappage par modulation d'amplitude en quadrature d'ordre inférieur, LOQ ;
un mappeur par modulation d'amplitude en quadrature, QAM, (d-405a, d-405b) pour mapper les données divisées en utilisant le procédé de mappage HOQ et le procédé de mappage LOQ ;
un codeur (104) pour coder les données mappées en utilisant un schéma à entrées multiples et sorties multiples, MIMO ; et
un modulateur par multiplexage par répartition en fréquence orthogonale, OFDM, (105a, 105b) pour moduler les données codées MIMO, dans lequel les données codées MIMO sont transmises à travers une trame de signal.

6. Appareil selon la revendication 5, dans lequel l'appareil comprend en outre :
un démultiplexeur (d-404a, d404b) configuré pour démultiplexer le premier et le deuxième train binaire en trains binaires pour le procédé de mappage HOQ et le procédé de mappage LOQ.

7. Appareil selon la revendication 6, dans lequel le démultiplexeur (d-404a, d404b) change en outre un ordre de bits de données dans le premier train binaire des deux trains binaires divisés selon le procédé de mappage HOQ et change un ordre de bits de données dans le deuxième train binaire des deux trains binaires divisés selon le procédé de mappage LOQ.

8. Appareil selon la revendication 5, dans lequel l'appareil comprend en outre :
un codeur externe (301) pour le codage externe de données pour chaque PLP ;
un codeur interne (303) pour le codage interne des données soumises au codage externe par un schéma de contrôle de parité à faible densité, LDPC ;
un mappeur par modulation d'amplitude en quadrature, QAM, (401a) pour mapper les données soumises au codage interne ;
un entrelaceur temporel (402a) pour l'entrelacement temporel des données mappées, dans lequel les données entrelacées temporellement sont codées en utilisant un schéma à entrées multiples et sortie unique, MISO, et
un modulateur par multiplexage par répartition en fréquence orthogonale, OFDM, (105a, 105b) pour moduler les données codées MISO, dans lequel les données codées MISO sont transmises à travers une trame de signal.

9. Procédé pour recevoir des signaux de radiodiffusion, le procédé comprenant :
la réception des signaux de radiodiffusion et des données de démodulation par multiplexage par répartition en fréquence orthogonale, OFDM, dans les signaux de radiodiffusion reçus ;
le décodage des données démodulées en utilisant un schéma à entrées multiples et sorties multiples, MIMO ;
le démappage par modulation d'amplitude en quadrature, QAM, des données décodées en utilisant un procédé de démappage par modulation d'amplitude en quadrature d'ordre supérieur, HOQ, et un procédé de démappage par modulation d'amplitude en quadrature d'ordre inférieur, LOQ ;
le désentrelacement des données démappées QAM pour un chemin de couche physique, PLP, individuel ;
le décodage interne des données désentrelacées par un schéma de contrôle de parité à faible densité, LDPC ;
le décodage externe des données soumises au décodage interne, dans lequel les données codées MIMO sont transmises à travers une trame de signal.

10. Procédé selon la revendication 9, dans lequel le procédé comprend en outre :
la division des données décodées en deux trains de symboles.

11. Procédé selon la revendication 10, dans lequel le procédé comprend en outre :
le changement d'un ordre de bits de données dans le premier train binaire selon le procédé de mappage HOQ ; et
le changement d'un ordre de bits de données dans le deuxième train binaire selon le procédé de mappage LOQ.

12. Procédé selon la revendication 9, dans lequel le procédé comprend en outre :
la réception d'autres signaux de radiodiffusion et la démodulation par multiplexage par répartition en fréquence orthogonale, OFDM, de données dans les autres signaux de radiodiffusion reçus ; et
le décodage des données démodulées en utilisant un schéma à entrées multiples et sortie unique, MISO.

13. Appareil pour recevoir des signaux de radiodiffusion, l'appareil comprenant :
un démodulateur par multiplexage par répartition en fréquence orthogonale, OFDM, (802a, 802b) pour recevoir les signaux de radiodiffusion et des données de démodulation par multiplexage par répartition en fréquence orthogonale, OFDM, dans les signaux de radiodiffusion reçus ;
un décodeur (803) pour décoder les données démodulées en utilisant un schéma à entrées multiples et sorties multiples, MIMO ;
un démappeur par modulation d'amplitude en quadrature, QAM, (b-1202a, b-1202b) pour démapper les données décodées en utilisant un procédé de démappage par modulation d'amplitude en quadrature d'ordre supérieur, HOQ, et un procédé de démappage par modulation d'amplitude en quadrature d'ordre inférieur, LOQ ;
un désentrelaceur (1301) pour désentrelacer les données démappées QAM pour un chemin de couche physique, PLP, individuel ;
un décodeur interne (1302) pour le décodage interne des données désentrelacées par un schéma de contrôle de parité à faible densité, LDPC ;
un décodeur externe (1302) pour le décodage externe des données soumises au décodage interne, dans lequel les données décodées MIMO sont transmises à travers une trame de signal.

14. Appareil selon la revendication 13, dans lequel l'appareil comprend en outre :
un diviseur de symboles (b-1201) pour diviser les données décodées en deux trains de symboles.

15. Appareil selon la revendication 14, dans lequel le démappeur QAM (b-1202a, b-1202b) change en outre un ordre de bits de données dans le premier train binaire selon le procédé de mappage HOQ et change un ordre de bits de données dans le deuxième train binaire selon le procédé de mappage LOQ.

16. Appareil selon la revendication 13, dans lequel le démodulateur par multiplexage par répartition en fréquence orthogonale, OFDM, (802a, 802b) reçoit d'autres signaux de radiodiffusion et des données de démodulation par multiplexage par répartition en fréquence orthogonale, OFDM, dans les autres signaux de radiodiffusion reçus ; et
le décodeur (803) décode en outre les données démodulées en utilisant un schéma à entrées multiples et sortie unique, MISO.
